# EUROPEAN PATENT APPLICATION

(11) **EP 4 610 380 A1**
(43) Date of publication of application: **03.09.2025**
(21) Application number: 24892466.4
(22) Date of filing: 12.08.2024
(51) Int. Cl.: C22C 38/04, C22C 38/02, C22C 38/14, C22C 38/12, C21D 8/02, C21D 1/26, C23C 2/12

(54) **HIGH-FRACTURE-STRAIN COMPONENT FORMED VIA HOT STAMPING, STEEL PLATE FOR HOT STAMPING, AND HOT STAMPING PROCESS**

(30) Priority: 21.11.2023 CN 202311561911
(71) Applicant: Pangang Group Panzhihua Iron & Steel Research Institute Co., Ltd., Sichuan 617000 (CN); Chengdu Advanced Metal Materials Industry Technology Research Institute Co., Ltd., Chengdu, Sichuan 610300 (CN)
(72) Inventor: CHANG, Zhiyuan, Panzhihua, Sichuan 617000 (CN); LI, Long, Panzhihua, Sichuan 617000 (CN); YU, Cansheng, Panzhihua, Sichuan 617000 (CN); YIN, Jingjing, Panzhihua, Sichuan 617000 (CN); ZHOU, Wei, Panzhihua, Sichuan 617000 (CN)
(74) Representative: Patentanwaltskanzlei Matschnig & Forsthuber OG
(86) International application number: PCT/CN2024/111401
(87) International publication number: WO 2025/107740

(57) **Abstract**

The present disclosure discloses a hot stamped component with high fracture strain, a press hardening steel sheet and a hot stamping process. Through innovative alloy composition and hot stamping process, the structure and mechanical properties after hot stamping are flexibly controlled, and the fracture strain of press hardening steel is improved to ensure the energy absorption effect. By combining Ti and Nb elements with C and N atoms in steel, solid solution C/N atoms are consumed to form nano-scale second phase particles, which are uniformly and dispersedly distributed on the matrix, thereby reducing the hardness difference at the interface between ferrite and martensite, and effectively improving the plasticity and toughness of the material. The materials involved are relatively simple, and the alloy cost is low. The process of preparing the press hardening steel and the hot stamping process have a wide process window. Based on control of the transfer time of the hot stamping sheet, the flexible control of the content of epitaxial ferrite (oriented attachment ferrite) is achieved, and finally the preparation of hot stamped components with different strength grades after hot stamping is achieved, which is very beneficial to the promotion of integrated door rings and will effectively contribute to the lightweighting of automobiles and the management of safe energy absorption.

## Description

### CROSS REFERENCE OF RELATED APPLICATION

This application claims priority to Chinese Patent Application No. 202311561911.7, titled "HOT STAMPED COMPONENT WITH HIGH FRACTURE STRAIN, PRESS HARDENING STEEL SHEET AND HOT STAMPING PROCESS", filed on November 21, 2023 with the China National Intellectual Property Administration, which is incorporated herein by reference in its entirety.

### FIELD

The present disclosure relates to the field technology of steel materials, in particular to a boron-containing steel composition suitable for manufacturing multiphase steel and hot forming steel and a method for processing its coated products. Specifically, it relates to a hot stamped component with high fracture strain, a press hardening steel sheet and a hot stamping process.

### BACKGROUND

With rapid development of science and technology, in order to reduce the weight of vehicle bodies and improve their safety performance simultaneously, the development of steel for automobiles towards high strength has become an inevitable trend.

Hot stamping forming technology refers to a new forming process in which a steel sheet blank or a preformed part blank is heated to the austenitizing temperature, kept warm for a certain period of time, and then quickly transferred to a mold by a manipulator, and then quickly stamped into shape by a press, and then quenched and held under pressure in the mold for a certain period of time to obtain ultra-high strength stamped parts. Under high temperature, the steel sheet is in an austenitized state, with a strength of about 200MPa and high plasticity. It is first formed and then hardened into a martensitic structure under a very small press pressure, which perfectly solves the contradiction between strength and formability. In recent years, press hardening steel has gradually been used. It is very important to achieve vehicle lightweighting and ensuring collision safety. To ensure collision safety, automobile components need to have sufficient resistance to collision intrusion, and at the same time rely on good deformation ability to absorb the energy brought by the collision. For this reason, it is particularly necessary to develop press hardening steel with high fracture strain (high VDA bending performance) for the energy absorption areas of the automobiles. In addition, the development of integrated door rings has further promoted the research and development of such press hardening steel.

In fact, most structural components of automobile bodies undergo bending deformation during collisions, and at this time the deformation state of the components is close to plane strain. Studies have shown that the collision performance of press hardening steel components is related to their bending performance under plane strain. In the three-point tip bending test standard VDA238-100 formulated by the German Association of the Automotive Industry, the width of the steel sheet that undergoes bending deformation is much greater than its thickness, and the radius of the bending punch is extremely small, resulting in the steel sheet being under a stress state of plane strain. For this reason, the current automotive industry generally uses this method to quickly measure the fracture strain of press hardening steel. When the bending load reaches its peak value, cracks begin to appear on the outer surface of the material under the influence of tensile stress, and the bending angle at this time also reaches the maximum value (i.e., the maximum bending angle αmax). Since αmax can evaluate the bending performance of the material, many international automobile companies use αmax and tensile performance as indicators to measure the mechanical properties of the material. In addition, when the bending angle is αmax, the strain on the outer surface of the material reaches the maximum strain value it can withstand without fracture under plane strain conditions, i.e., the bending fracture strain. The bending fracture strain (the equivalent strain on the outer surface of the material corresponding to αmax) more directly evaluates the fracture limit of the material under plane strain conditions. At the same time, the result can be directly used as the fracture limit strain of the material for vehicle CAE collision analysis, and becomes an important parameter for judging whether the component has a collision fracture failure. A higher αmax means that the material has a higher bending fracture strain.

CN108707825A discloses a method for producing a 550MPa grade high plasticity press hardening steel sheet, wherein its alloy composition is C: 0.08-0.10%, Si: 0.25-0.40%, Mn: 1.10-1.50%, P≤0.02%, S≤0.01%, Als: 0.01-0.10%, N≤0.005%, Nb: 0.025-0.05%. Due to the lack of Ti element for grain refinement in the alloy composition, the grains are relatively coarse, and only hot stamped components with relatively low strength levels (below 620MPa) can be produced. In addition, the coiling temperature involved in the invention is relatively high, and grain boundary oxidation is likely to occur during hot rolling, making it not suitable for the production of pre-coated steel sheets.

CN113957349B discloses a 600MPa grade press hardening steel and its production method, wherein its composition is C: 0.015-0.04%; Si: 0.30-0.50%; Mn: 1.6-2.0%; Cr: 0.2-0.4%; Nb: 0.06-0.10%; Al≤0.003%; P≤0.020%; S≤0.004%; N≤0.005%; O: 0.003-0.006%, with the balance being Fe and inevitable impurity elements. Based on the thin strip casting and rolling process, the invention provides a 600MPa grade press hardening steel without banded structure and decarburized layer, which makes up for shortcomings of the banded structure existing in the conventional press hardening steel and the decarburized layer existing in conventional bare sheet press hardening steel. In terms of composition, the alloy composition contains higher contents of Mn and Nb, which are costly and difficult to control. In addition, it is unrealistic to make up for the decarburized layer in the conventional hot stamping process in the invention. Under conventional industrial hot stamping conditions, all bare sheets will inevitably produce a decarburized layer of a certain thickness after hot stamping (unless the atmosphere is extremely good and the furnace is extremely airtight, which is actually unrealistic in industrial production lines).

### SUMMARY

In order to overcome defects of the above-mentioned conventional technology, the present disclosure flexibly regulates the structure and mechanical properties after hot stamping through innovative alloy composition, production process and hot stamping process, improves the fracture strain of press hardening steel to ensure the energy absorption effect, well meets the requirements of energy-absorbing parts in the soft areas of automotive materials, and more effectively realizes the management of collision safety energy.

In order to achieve the above-mentioned invention purpose, a press hardening steel with high fracture strain and a method for preparing a hot stamped component are provided according to embodiments of the present disclosure.

The mass percentage ranges of chemical components of the press hardening steel is as follows: C: 0.055-0.080%, Mn: 1.1-1.4%, Si: 0.02-0.15%, Nb: 0.020-0.045%, Ti: 0.025-0.060%, and the remaining elements being Fe and inevitable impurities; where the mass fraction ratios of the elements meet the following conditions: Ti/(C+N)≥0.6, 0.045%≤Nb+Ti≤0.105%, C+Mn/20+Si/30+2P+4S≤0.21%. By combining Ti and Nb elements with C and N atoms in steel, solid solution C/N atoms are consumed to form nano-scale second phase particles, which are uniformly and dispersedly distributed on the matrix, thereby reducing the hardness difference at the interface between ferrite and martensite, and effectively improving the plasticity and toughness of the material.

The press hardening steel with high fracture strain is commonly used in the performance-related parts of the soft areas of automobiles. After hot stamping, the tensile strength is 600-850MPa, the elongation A50 is 13-28%, and the corresponding bending angle under the maximum load according to VDA238-100 is 100-150° (1.6mm). Its structural characteristics are a large amount of ferrite + a small amount of martensite.

A method for preparing the above-mentioned press hardening steel with high fracture strain and the hot stamped component is provided. The method comprises the following steps:
(1) Smelting process: smelting according to chemical compositions of the press hardening steel with high fracture strain, and casting into a slab;
(2) Hot rolling process: heating, descaling, rough rolling, finish rolling and laminar cooling the slab to obtain a hot rolled coil; where the descaling process is controlled during the rough rolling and finish rolling stages, and a final rolling temperature is 850-930°C; wherein a front-stage cooling method is adopted for the laminar cooling, and cooling rates of upper and lower manifolds are 45-60% and 70-85% respectively, and a coiling temperature is 530-620°C;
(3) Pickling and rolling process: pickling the hot rolled coil, then cold rolling into a thin strip steel of 0.8-3.0mm, where a cold rolling reduction rate of the thin strip steel is 45-75%, and the cold rolling reduction rate gradually decreases with the increase of the cold rolling thickness of the material;
(4) Continuous annealing process: heating the cold rolled thin strip steel in different stages, to 710°C at a heating rate of 3-8°C/s and then to 810-860°C at a heating rate of 0.5-5°C/s, and then keeping warm for 50-170s, and then slowly cooling to 730-760°C at a rate of 1-5°C/s and then quickly cooling to 300-380°C at a rate of 35-50°C/s, carrying out over-aging heat preservation for 400-800s and then cooling to room temperature, wherein skin-pass rolling elongation range is 0.30-0.55%, to obtain continuously annealed sheet; or
   hot-dipping Al-Si process: heating the cold rolled thin strip steel in different stages, to 300°C at a heating rate of 10-20°C/s, to 700-730°C at a heating rate of 3-10°C/s and then to 800-850°C at a heating rate of 0.4-3°C/s; carrying out homogenizing heat preservation for 30-100s and then cooling to 635-670°C, and carrying out homogenizing heat preservation for a period of time, entering an Al-Si bath for hot-dipping treatment for a time of 2-25s, and after leaving the Al-Si bath, cooling to room temperature at a rate of ≥3°C/s, wherein machine set speed is 60-110m/min and skin-pass rolling elongation range is 0.15-1.0%, to obtain Al-Si coating sheet;
(5) Hot stamping process: heating the continuously annealed sheet or Al-Si coating sheet obtained in step (4) for austenitization (to 890-960°C), keeping warm for a certain time, total heating time = sheet thickness*115+50 to 100s, then quickly transferring to a mold with a transfer time (of 3-12s) for quenching to 20-180°C at a pressure of 5-20MPa and holding the pressure for 5-20s (determined according to the thickness of the sheet). The furnace can be a box furnace or a roller hearth furnace. The furnace for heating the continuously annealed sheet is filled with nitrogen and a small amount of natural gas or with only pure nitrogen. The atmosphere of the furnace for heating the Al-Si coating sheet is dry compressed air with a dew point controlled at -30°C to -5°C.

The above hot stamping process can realize the preparation of hot stamped components of different strength grades by adjusting the transfer time of the sheet. When the transfer time of the sheet is short, the strength after quenching is high; when the transfer time of the sheet is long, the strength after quenching is reduced.

In the above-mentioned alloy system, the material obtained by adjusting the hot stamping heat treatment process and quenching process of the continuously annealed sheet has a yield strength of 350-650MPa, a tensile strength of 600-840MPa, an elongation A₅₀ of 13-28%, and the bare sheet (surface decarburized layer removed) with a thickness of 1.6mm after hot stamping has a bending angle of 100-148° under the maximum bending load according to VDA238-100. The material obtained by adjusting the hot stamping heat treatment process and quenching process of the Al-Si coating sheet has a yield strength of 350-660MPa, a tensile strength of 600-850MPa, an elongation A₅₀ of 13-28%, and the Al-Si coating sheet with a thickness of 1.6mm has a bending angle of 100-145° under the maximum bending load according to VDA238-100. Whether it is the continuously annealed sheet or the Al-Si coating sheet, the quenched structure after hot stamping is composed of a large amount of ferrite (composed of proeutectoid ferrite + oriented attachment ferrite/epitaxial ferrite) + a small amount of martensite (ferrite>70%), and there is a nano-scale microalloy precipitation phase on the matrix.

Compared with the conventional technology, the beneficial effects of the present disclosure are as follows:

The materials involved in the present disclosure are relatively simple, and the alloy cost is low. By combining Ti and Nb elements with C and N atoms in steel, solid solution C/N atoms are consumed to form nano-scale second phase particles, which are uniformly and dispersedly distributed on the matrix, thereby reducing the hardness difference at the interface between ferrite and martensite, and effectively improving the plasticity and toughness of the material. The process of preparing the press hardening steel and the hot stamping process have a wide process window. Based on the control of the transfer time of the hot stamping sheet, the flexible control of the content of epitaxial ferrite (oriented attachment ferrite) is achieved, and finally the production and preparation of hot stamped components with different strength grades after hot stamping are achieved, which is very beneficial to the promotion of integrated door rings and will effectively contribute to the lightweighting of automobiles and the management of safe energy absorption.

### BRIEF DESCRIPTION OF THE DRAWINGS

FIG. 1 is morphology of the matrix structure and coating layer of the Al-Si coating sheet after hot stamping according to an embodiment of the present disclosure.
FIG. 2 is photo of the matrix structure of the Al-Si coating sheet before hot stamping according to an embodiment of the present disclosure.
FIG. 3 is morphology of the coating layer of the Al-Si coating sheet before hot stamping according to an embodiment of the present disclosure.

### DETAILED DESCRIPTION

In order to facilitate the understanding of the present disclosure, the present disclosure will be described more comprehensively with reference to relevant drawings. The preferred embodiments of the present disclosure are given in the drawings. However, the present disclosure may be implemented in many different forms and is not limited to the embodiments described herein. On the contrary, the purpose of providing these embodiments is to make the understanding of the present disclosure more thorough and comprehensive.

The present disclosure is further described below in conjunction with specific embodiments, but the present disclosure is not limited in any way. To avoid redundancy, the raw materials in the following embodiments are all commercially available products unless otherwise specified, and the methods used are all conventional methods unless otherwise specified.

### Example

This Example provides 3 groups (numbered A, B, and C) of alloy compositions of the press hardening steel with high fracture strain, as shown in Table 1.

**Table 1 Chemical composition (wt.%) of the 3 groups of press hardening steel with high fracture strain in the Example**

| Example No. | C | Si | Mn | Nb | Ti | P | S | N | Als |
|---|---|---|---|---|---|---|---|---|---|
| A | 0.055 | 0.15 | 1.4 | 0.035 | 0.025 | 0.022 | 0.0020 | 0.0029 | 0.026 |
| B | 0.068 | 0.10 | 1.2 | 0.035 | 0.050 | 0.019 | 0.0012 | 0.0032 | 0.032 |
| C | 0.080 | 0.08 | 1.1 | 0.039 | 0.060 | 0.017 | 0.0010 | 0.0030 | 0.031 |

The method for preparing the above-mentioned press hardening steel with high fracture strain and the hot stamped component comprises the following steps:
(1) Smelting process: Smelting was performed according to the chemical compositions of the press hardening steel with high fracture strain in Table 1, and a slab was cast.
(2) Hot rolling process: The slab was heated, descaled, rough rolled, finish rolled and laminar cooled to obtain a hot rolled coil; wherein the descaling process was strictly controlled during the rough rolling and finish rolling stages, and the final rolling temperature was 850-930°C; wherein a front-stage cooling method was adopted for the laminar cooling, and cooling rates of the upper and lower manifolds were 45-60% and 70-85% respectively, and the coiling temperature was 530-620°C. The specific hot rolling process parameters are shown in Table 2.

**Table 2 Main process parameters of hot rolling**

| Example No. | Initial rolling temperature/°C | Final rolling temperature/°C | Coiling temperature/°C |
|---|---|---|---|
| A | 1100 | 920 | 530 |
| B | 1075 | 900 | 570 |
| C | 1130 | 860 | 620 |

(3) Pickling and rolling process: The hot rolled coil was pickled and cold-rolled into a thin strip steel of 0.8-3.0mm, wherein the cold rolling reduction rate was 45-75%, and the cold rolling reduction rate gradually decreased with the increase of the cold rolling thickness of the material.
(4) Continuous annealing process: The cold-rolled thin strip steel was heated in different stages, to 710°C at a heating rate of 3-8°C/s and then to 810-860°C at a heating rate of 0.5-5°C/s, and kept warm for 50-170s, and then slowly cooled to 730-760°C at a rate of 1-5°C/s and then quickly cooled to 300-380°C at a rate of 35-50°C/s; the obtained steel was subjected to over-aging heat preservation for 400-800s, and then cooled to room temperature, wherein the skin-pass rolling elongation range was 0.30-0.55%, to obtain a continuously annealed sheetl; or
Hot-dipping Al-Si process: The cold-rolled thin strip steel was heated in different stages, to 300°C at a heating rate of 10-20°C/s, to 700-730°C at a heating rate of 3-10°C/s and then to 800-850°C at a heating rates of 0.4-3°C/s; the obtained steel was subjected to homogenizing heat preservation for 30-100s, and then cooled to 635-670°C, and then subjected to homogenizing heat preservation for a period of time, it entered the Al-Si bath for hot-dipping treatment for a time of 2-25s, and after leaving the Al-Si bath, the obtained steel was cooled to room temperature at a speed of ≥3°C/s, wherein the machine set speed was 60-110m/min, and the skin-pass rolling elongation range was 0.15-1.0%, to obtain Al-Si coating sheet.
(5) Hot stamping process: The continuously annealed sheet or Al-Si coating sheet obtained in step (4) was heated to austenitization (890-960°C), kept warm for a certain time, a total heating time = sheet thickness*115+50 to 100s, then quickly transferred to the mold with a transfer time (of 3-12s) for quenching to 20-180°C at a pressure of 5-20MPa, and the pressure was held for 5-20s (determined according to the thickness of the sheet). The furnace may be a box furnace or a roller hearth furnace. The furnace for heating the continuously annealed sheet was filled with nitrogen and a small amount of natural gas or with only pure nitrogen. The atmosphere of the furnace for heating the Al-Si coating sheet was dry compressed air with a dew point controlled at -30°C to -5°C.

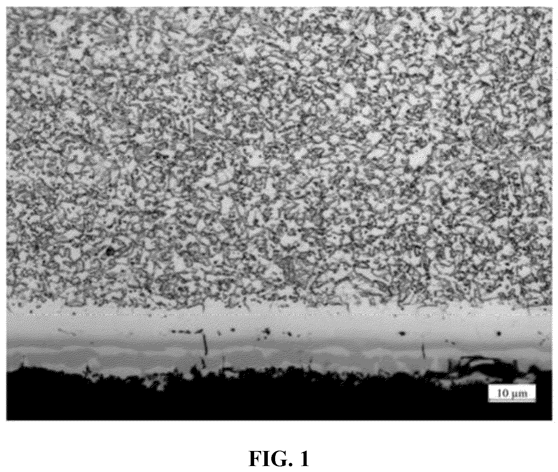

The continuously annealed sheet or Al-Si coating sheet with a thickness of 1.60mm was heated in a roller hearth furnace to complete austenitization. The process is shown in Table 3. After being held at an austenitizing temperature for 280s, the samples were transferred to a flat die by air cooling for 3, 7, and 12s (the sample numbers were A-3, A-7, A-12; B-3, B-7, B-12; C-3, C-7, C-12 respectively). The structure after quenching was ferrite + a small amount of fine martensite. Its microstructure is shown in Figure 1, and its mechanical properties are shown in Table 4.

**Table 3 Heating process in the roller hearth furnace**

| Heating process | Zone 1 | | Zone 2 | Zone 3 | | Zone 4 | Zone 5 | | Zone 6 | Zone 7 | | Zone 8 | | Zone 9 | | Total |
|---|---|---|---|---|---|---|---|---|---|---|---|---|---|---|---|---|
| | 1^{st} stage | 2^{nd} stage | 3^{rd} stage | 4^{th} stage | 5^{th} stage | 6^{th} stage | 7^{th} stage | 8^{th} stage | 9^{th} stage | 10^{th} stage | 11^{th} stage | 12^{th} stage | 13^{th} stage | 14^{th} stage | 15^{th} stage | time/s |
| Roller hearth furnace | 830 | 830 | 830 | 850 | 870 | 890 | 910 | 960 | 960 | 920 | 920 | 920 | 920 | 920 | 920 | 210 |

**Table 4 Mechanical properties of hot-dipping Al-Si coating sheet prepared from the press hardening steel with high fracture strain after hot stamping**

| Serial number | Yield Strength/MPa | Tensile strength/MPa | Elongation A₅₀/% | VDA238-100 Bending angle RD/° |
|---|---|---|---|---|
| A-3 | 470 | 680 | 23.3% | 123 |
| A-7 | 392 | 623 | 26.5% | 131 |
| A-12 | 353 | 601 | 28.0% | 149 |
| B-3 | 563 | 731 | 20.1% | 120 |
| B-7 | 496 | 692 | 22.2% | 129 |
| B-12 | 399 | 661 | 23.5% | 135 |
| C-3 | 620 | 845 | 15.6% | 106 |
| C-7 | 560 | 780 | 17.1% | 116 |
| C-12 | 511 | 719 | 19.8% | 122 |

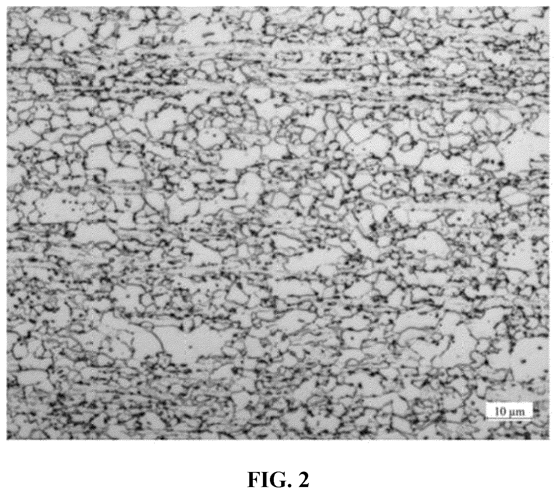

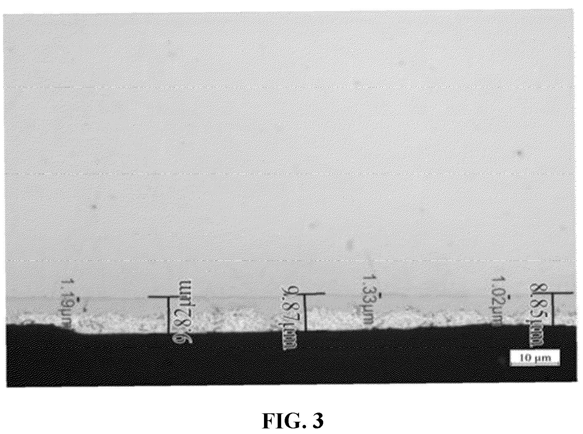

The results show that the press hardening steel with high fracture strain of the present disclosure has excellent strength-ductility product and three-point bending performance representing bending fracture strain, meeting the high energy absorption requirements of the materials for automotive parts. It is suitable for the preparation of press hardening steel and its corresponding hot stamped components. The structure before hot stamping is ferrite + pearlite structure (as shown in FIG. 2), the thickness of Al-Si coating layer is 8-15µm, preferably 10-12µm (as shown in FIG. 3). By adjusting the transfer time of the hot stamping sheet, the structure and performance after hot stamping are flexibly adjusted, the structure after hot stamping is ferrite + a small amount of martensite (size and content of the ferrite can be adjusted by air cooling time during sheet transfer), the tensile strength is 600-850MPa, the maximum bending angle according to VDA238-100 representing collision performance is above 100-150°, and its plasticity and toughness is far superior to those of 22MnB5 steel (three-point bending angle is about 60°).

The technical features of the above-mentioned embodiments can be combined arbitrarily. In order to make the description concise, all possible combinations of the technical features in the above-mentioned embodiments are not described. However, as long as there is no contradiction in the combination of these technical features, it should be considered as the scope of this specification.

The above-mentioned embodiments only express several implementation methods of the present disclosure, and the description is relatively specific and detailed, but it cannot be understood as a limitation on the scope of the present disclosure. It should be pointed out that for those skilled in the art, several deformations and improvements can be made without departing from the concept of the present disclosure, and these all belong to the protection scope of the present disclosure. Therefore, the protection scope of the present disclosure shall be based on the appended claims.

## Claims

1. A press hardening steel with high fracture strain, wherein mass percentage ranges of chemical components of the press hardening steel are as follows: C: 0.055-0.080%, Mn: 1.1-1.4%, Si: 0.02-0.15%, Nb: 0.020-0.045%, Ti: 0.025-0.060%, and remaining elements being Fe and inevitable impurities;
wherein, mass fraction ratios of the elements are: Ti/(C+N)≥0.6, 0.045%≤Nb+Ti≤0.105%, C+Mn/20+Si/30+2P+4S≤0.21%;
the press hardening steel with high fracture strain after hot stamping has a tensile strength of 600-850MPa, an elongation of 13-28%, and a corresponding bending angle under the maximum load according to VDA238-100 of 100°-150°.

2. A method for preparing a hot stamped component using the press hardening steel with high fracture strain according to claim 1, wherein the method comprises the following steps:
(1) Smelting process: smelting according to chemical compositions of the press hardening steel with high fracture strain, and casting into a slab;
(2) Hot rolling process: heating, descaling, rough rolling, finish rolling and laminar cooling the slab to obtain a hot rolled coil; wherein the descaling process is controlled during the rough rolling and finish rolling stages, and a final rolling temperature is 850-930°C; wherein a front-stage cooling method is adopted for the laminar cooling, and cooling rates of upper and lower manifolds are 45-60% and 70-85% respectively, and a coiling temperature is 530-620°C;
(3) Pickling and rolling process: pickling the hot rolled coil, then cold rolling into a thin strip steel of 0.8-3.0mm, wherein a cold rolling reduction rate of the thin strip steel is 45-75%, and the cold rolling reduction rate gradually decreases with the increase of the cold rolling thickness of the material;
(4) Continuous annealing process: heating the cold rolled thin strip steel in different stages, to 710°C at a heating rate of 3-8°C/s and then to 810-860°C at a heating rate of 0.5-5°C/s, and then keeping warm for 50-170s, and then slowly cooling to 730-760°C at a rate of 1-5°C/s and then quickly cooling to 300-380°C at a rate of 35-50°C/s, carrying out over-aging heat preservation for 400-800s and then cooling to room temperature, wherein skin-pass rolling elongation range is 0.30-0.55%, to obtain continuously annealed sheet; or
hot-dipping Al-Si process: heating the cold rolled thin strip steel in different stages, to 300°C at a heating rate of 10-20°C/s, to 700-730°C at a heating rate of 3-10°C/s and then to 800-850°C at a heating rate of 0.4-3°C/s; carrying out homogenizing heat preservation for 30-100s and then cooling to 635-670°C, and carrying out homogenizing heat preservation for a period of time, entering an Al-Si bath for hot-dipping treatment for a time of 2-25s, and after leaving the Al-Si bath, cooling to room temperature at a rate of ≥3°C/s, wherein machine set speed is 60-110m/min and skin-pass rolling elongation range is 0.15-1.0%, to obtain Al-Si coating sheet;
(5) Hot stamping process: heating the continuously annealed sheet or Al-Si coating sheet obtained in step (4) to 890-960°C for austenitization, keeping warm for a certain time, total heating time = sheet thickness*115+50 to 100s, then quickly transferring to a mold with a transfer time of 3-12s for quenching to 20-180°C at a pressure of 5-20MPa and holding the pressure for 5-20s.

3. The method according to claim 2, wherein a furnace for heating the continuously annealed sheet in the hot stamping process is filled with nitrogen and a small amount of natural gas or with only pure nitrogen; an atmosphere of a furnace for heating the Al-Si coating sheet is dry compressed air with a dew point controlled at -30 to -5°C.

4. The method according to claim 3, wherein the material obtained after performing the hot stamping process in step (5) on the continuously annealed steel sheet has a yield strength of 350-650MPa, a tensile strength of 600-840MPa, an elongation A₅₀ of 13-28%, and a bare sheet with a thickness of 1.6mm after hot stamping has a bending angle of 110-150° under the maximum bending load according to VDA238-100.

5. The method according to claim 4, wherein the material obtained after performing the hot stamping process in step (5) on the Al-Si coating sheet has a yield strength of 350-660MPa, a tensile strength of 600-850MPa, an elongation A₅₀ of 13-28%, and an Al-Si coating sheet with a thickness of 1.6mm has a bending angle of 100-145° under the maximum bending load according to VDA238-100.
